# FASCICULE DE BREVET EUROPEEN

(11) **EP 2 293 181 B1**
(45) Date de publication et mention de la délivrance du brevet: **03.04.2013**
(21) Numéro de dépôt: 10305784.0
(22) Date de dépôt: 15.07.2010
(51) Int. Cl.: G06F 3/14, G06F 11/00

(54) **Dispositif de vérification de l'intégrité d'une donnée affichée et procédé associé**
Vorrichtung zur Überprüfung der Integrität von angezeigten Daten, und entsprechendes Verfahren
Device for verifying the integrity of displayed data and associated method

(30) Priorité: 21.07.2009 FR 0955071
(43) Date de publication de la demande: 09.03.2011
(73) Titulaire: ALSTOM Transport SA, 92300 Levallois-Perret (FR); Centralp-Automatismes, 69200 Venissieux (FR)
(72) Inventeur: Fifis, Jacques, 69230 Saint Genis Laval (FR); Euvrard, Christian Louis Georges Henri, 69680 Chassieu (FR)
(74) Mandataire: Blot, Philippe Robert Emile

(56) Documents cités:
- DE-A1-102005 045 601
- FR-A- 2 788 365
- FR-A- 2 792 429
- US-A1- 2005 276 514

## Description

### Domaine technique

L'invention a pour domaine celui des dispositifs de vérification de l'intégrité d'une donnée affichée, sous la forme d'une image, sur un dispositif d'affichage.

Dans un matériel roulant ferroviaire, diverses informations sont affichées en cabine, en vue de leur surveillance par le conducteur.

Parmi les différentes données affichées, certaines sont plus particulièrement sensibles car elles induisent des actions de régulation de la part du conducteur.

C'est par exemple le cas de l'affichage de la vitesse instantanée du véhicule.

En effet, le conducteur prend régulièrement en compte cette information affichée pour corriger la vitesse du véhicule de manière à respecter les limites de vitesse imposées le long de la voie de circulation.

Il est donc primordial d'assurer un affichage fiable de ces données sensibles.

### Etat de la technique

De manière générale, les dispositifs d'affichage présents en cabine présentent l'information sous la forme d'une image affichée sur un écran. Dans ce cas, le dispositif d'affichage est commandé par un contrôleur vidéo. Ce dernier reçoit, d'un calculateur principal, une série d'ordres graphiques correspondant à l'image à afficher ; le contrôleur vidéo traite cette série d'ordres graphiques pour générer une « bit-map » ou « matrice de pixels », qui est une représentation point par point de l'image à afficher ; il stocke cette bit-map dans une mémoire vidéo dédiée ; et, il code de manière adaptée cette bit-map pour la transmettre au dispositif d'affichage en vue de l'affichage proprement dit de l'image à l'écran.

Le document FR 2 868 193 divulgue une architecture d'affichage comportant un moyen de vérification de l'intégrité de l'affichage, apte à lire le contenu de la mémoire vidéo du contrôleur vidéo et à comparer le contenu lu à une valeur de consigne.

Selon cette architecture, la vérification permet de détecter d'éventuels dysfonctionnements en amont de la mémoire vidéo du contrôleur vidéo.

Mais, de nombreux risques d'erreur peuvent affecter le contrôleur vidéo lui-même, en particulier sa manière de coder la bit-map pour la transmettre au dispositif d'affichage, ainsi que l'intégrité de la connexion entre l'interface de sortie du contrôleur vidéo et l'interface d'entrée du dispositif d'affichage. On notera que dans certains agencements, le contrôleur vidéo et le dispositif d'affichage peuvent être à distance l'un de l'autre, par exemple 10 mètres ou plus.

De plus, les fabricants de contrôleur vidéo ne décrivent pas volontiers l'architecture interne de leur matériel et la manière d'accéder au contenu de la mémoire.

Le document WO 20071033902 décrit une architecture d'affichage dans laquelle, pour chaque valeur d'information à afficher, un pictogramme spécifique est injecté dans une zone particulière de l'image à afficher. Par une analyse de cette zone particulière de l'image, on peut détecter le pictogramme et en déduire la valeur d'information qu'il code La comparaison de cette valeur déduite avec la valeur de consigne permet de détecter d'éventuelles discordances symptomatiques d'un dysfonctionnement dans la chaîne d'affichage. Toutefois, outre le fait que cette technique surcharge l'image, elle présente l'inconvénient majeur de ne vérifier de façon certaine que la zone où est affiché le pictogramme supplémentaire, sans véritablement vérifier la zone où est affichée l'information exploitée.

Le document FR2788365 décrit un dispositif d'affichage à cristaux liquides, comportant une pluralité d'éléments commandés indépendamment, de type «7 segments ». Il comporte également des moyens de relecture de l'état de chaque élément, ce qui permet de vérifier que chaque élément est bien dans l'étant correspondant à la consigne de commande qui lui est appliquée. Bien évidemment, cette technique ne peut être transposée à des affichages de matrices de pixels de tailles importantes, car elle nécessiterait des circuits de contrôle pour chaque pixel, ce qui rendrait trop complexe et coûteux le dispositif global.

Le document US 2005/276514 divulgue un dispositif de vérification conçu de manière à vérifier l'intégrité de la chaîne d'affichage juqu'au contrôleur vidéo de l'écran matriciel.

L'invention a donc pour but de pallier aux problèmes précités, en proposant un dispositif amélioré par rapport à l'état de la technique permettant de vérifier l'intégrité de l'image à afficher sur la totalité de la voie d'affichage, tout en permettant l'utilisation de composants « prêts à utiliser » tels que fournis par les fabricants.

L'invention a donc pour objet un dispositif et un procédé tels que définis par les revendications.

En d'autres termes, l'invention consiste à reconstruire dans un système dédié, la partie de l'image sur laquelle figure l'information correspondant à la donnée affichée, et à déduire de cette image reconstruite la valeur de la donnée qui est affichée. Cette valeur est comparée avec la consigne qui est censée être affichée, de sorte qu'une discordance est le signe d'une altération du fonctionnement de la chaîne d'affichage. On notera que c'est sur la zone utile pour l'utilisateur, ou plus précisément sur le signal commandant l'affichage de cette zone, que porte l'analyse, de sorte que la vérification est d'une grande fiabilité. En effet, seules des défaillances pouvant intervenir à l'intérieur de la dalle vidéo ne sont pas détectée par l'invention. Toutefois, il faut noter également que les dysfonctionnements intervenant à l'intérieur de la dalle vidéo sont le plus généralement détectables visuellement par l'utilisateur, de sorte que le niveau de vérification procuré par l'invention peut être considéré comme très satisfaisant.

### Description sommaire des figures

D'autres caractéristiques et avantages de l'invention ressortiront plus clairement de la description détaillée qui va suivre, donnée à titre indicatif et nullement limitatif, et faite en se référant aux dessins annexés, sur lesquels :
- la Figure 1 est un schéma bloc d'une architecture d'affichage d'une donnée, comportant un dispositif de vérification de l'intégrité de l'affichage selon l'invention ; et,
- la Figure 2 est un algorithme représentant les différentes étapes du procédé de vérification de l'intégrité de l'affichage, mis en oeuvre par l'architecture de la Figure 1.

### Exemple de réalisation de l'invention

L'architecture d'affichage d'une donnée sensible, telle que la vitesse d'un véhicule ferroviaire, comporte une voie d'affichage et une voie de vérification de l'intégrité de l'affichage.

De manière connue en soi, la voie d'affichage comporte un calculateur principal 10, un contrôleur vidéo 12 et un dispositif d'affichage 14.

Le calculateur principal 10 est connecté à un capteur 16 permettant l'acquisition d'une donnée correspondant à la valeur instantanée de la vitesse. Cette connexion peut être directe ou indirecte, c'est-à-dire que l'information de vitesse peut transiter par une liaison avec un ou plusieurs autres ordinateurs reliés en réseau par exemple.

Le calculateur principal 10 comporte des moyens aptes, à partir de la valeur instantanée de la vitesse, à élaborer, à chaque période d'échantillonnage de l'architecture, une série d'ordres graphiques représentatifs de cette valeur en vue de son affichage sous la forme d'une image sur un écran. Ces ordres graphiques peuvent être plus ou moins élaborés : ils peuvent, par exemple, comporter des références à des objets élémentaires, tels que des lignes, des triangles, des cercles, etc., associées respectivement à une liste d'attributs, tels que la position des sommets, la couleur, etc. On peut citer à titre d'exemple trois types d'affichage d'une information quantitative. Ainsi, la valeur peut être représentée par un ensemble de chiffres formant un nombre représentant cette valeur. La valeur peut également être représentée par un trait figurant l'aiguille d'un cadran, dont l'angle formé avec une direction de référence est lié à la valeur à afficher. Cette même valeur peut être représentée par un curseur se déplaçant dans une zone rectiligne, et dont la position à l'intérieur de cette zone est représentative de la valeur. En variante, cette zone peut comporter deux régions variables, de couleurs différentes, et la frontière entre ces ceux régions se déplace en fonction de la valeur à afficher.

En sortie, le calculateur principal 10 émet un signal correspondant à cette série d'ordres graphiques représentatifs de la vitesse instantanée sur un bus 18 dédié reliant le contrôleur principal 10 et le contrôleur vidéo.

Le contrôleur vidéo 12 comporte une interface entrée/sortie 20 permettant de connecter le contrôleur vidéo sur le bus 18, un microprocesseur 22, une mémoire vidéo 24, des moyens de pilotage 26 du dispositif d'affichage 14 et une interface de sortie 28 permettant la connexion entre le contrôleur vidéo 12 et le dispositif d'affichage 14 via une liaison 30 dédiée.

La série d'ordres graphiques, reçue en entrée du contrôleur vidéo 12, est traitée par le microprocesseur 22 pour générer une bit-map représentant point par point l'image à afficher. Par exemple, le microprocesseur interprète l'ordre graphique désignant l'objet élémentaire « ligne » et créer la bit-map de manière à ce que l'image correspondante comporte effectivement une ligne.

La bit-map construite est stockée dans la mémoire 24 du contrôleur vidéo.

Pour l'affichage de la bit-map en tant qu'image affichée, le processeur 22 extrait la bit-map de la mémoire 24 et l'adresse aux moyens de pilotage 26.

Ces moyens de pilotage 26 traitent les informations de la bit-map de manière à générer un signal vidéo. Ce signal vidéo est émis en sortie du contrôleur 12, sur la liaison 30, à destination du dispositif d'affichage 14. De préférence, le signal vidéo respecte le protocole LVDS («Low Voltage Differential Signaling» en anglais).

Le dispositif d'affichage 14 comporte une dalle 32 composée de pixels sans rémanence. De préférence, la dalle 32 est une dalle à cristaux liquides selon la technologie TFT («Thin Film Transistor»). Dans ce cas, elle est équipée d'un système de rétroéclairage 34.

Par ailleurs, le dispositif d'affichage 14 comporte une interface d'entrée 35 permettant la connexion du dispositif d'affichage 14 au contrôleur vidéo 12 via la liaison 30. Le dispositif d'affichage 14 comporte également des moyens de commande 36 permettant de modifier l'état des transistors associés à chacun des pixels de la dalle, en fonction du signal vidéo reçu.

La voie de vérification de l'intégrité de l'affichage comporte un dispositif dédié 40.

Le dispositif de vérification de l'intégrité de l'affichage 40 comporte un microprocesseur 42 et une mémoire 44.

Le dispositif 40 comporte une interface d'entrée/sortie réseau 56 permettant de connecter le dispositif 40 sur un réseau local 58 respectant par exemple le protocole ETHERNET.

Le dispositif de vérification 40 comporte une interface d'entrée 46. La liaison 30 comporte une dérivation 30', réalisée à proximité du dispositif d'affichage 14 et connectée à l'entrée 46 du dispositif 40. Ce montage permet de prélever, sans le perturber, le signal vidéo appliqué en entrée du dispositif d'affichage 14, pour l'appliquer également en entrée du dispositif de vérification 40.

Le dispositif de vérification 40 comporte un moyen de reconstruction 48 permettant, à partir du signal vidéo appliqué sur l'entrée 46, de reconstruire une image correspondant à la fraction de l'image affichée où figure la donnée à surveiller. Dans le mode de réalisation actuellement préféré, le moyen de reconstruction 48 est mis en oeuvre sous forme d'un circuit électronique. Il peut par exemple s'agir d'une composant programmable, de type FPGA ou analogue. Le moyen de reconstruction 48 est adapté pour produire, à partir du signal vidéo au format LVDS, une bit-map reconstruite. Le moyen de reconstruction 48 effectue un traitement sensiblement inverse au codage effectué par le moyen de pilotage 26 du contrôleur vidéo. Par traitement « sensiblement inverse », on entend que la reconstruction analyse les trames du signal LVDS en utilisant sa syntaxe prédéfinie, de manière à identifier les coordonnées des points de la bit-map analysée pour ne conserver dans la bit-map reconstruite que les points pertinents, et donc limiter la taille de cette dernière pour conserver uniquement la zone où se trouve l'information à vérifier.

Le format de la bit-map reconstruite peut être différent du format de la bit-map contenue dans la mémoire 24 du contrôleur vidéo.

Le dispositif de vérification 40 comporte, en outre, un moyen d'analyse d'images 50, un moyen de comparaison 52 et un moyen d'alarme 54. Dans le mode de réalisation actuellement préféré, les moyens d'analyse 50, de comparaison 52 et d'alarme 54 sont respectivement mis en oeuvre par l'exécution de programmes informatiques, dont les instructions sont stockées dans la mémoire 44 du dispositif de vérification 40.

Le moyen d'analyse d'images 50 permet d'extraire de la bit-map reconstruite par le moyen de reconstruction 48, une donnée reconstruite.

Entre autres informations, le contrôleur principal 10 transmet au dispositif de vérification 40 une valeur de consigne de la vitesse instantanée. Cette valeur de consigne peut être la valeur de la vitesse instantanée à partir de laquelle l'image affichée a été élaborée, c'est-à-dire la valeur mesurée par le capteur 16. De préférence, la valeur de consigne est la valeur de la vitesse instantanée mesurée au moyen d'autres moyens d'acquisition de la vitesse, de manière à offrir une vérification non seulement de l'intégrité de l'affichage de la donnée, mais encore de l'acquisition de cette donnée. Dans ce cas, la valeur de consigne est transmise sur le réseau local 58 respectant par exemple le protocole ETHERNET, par un autre calculateur que le calculateur principal 10. En d'autres termes, la vérification se fait avantageusement en comparant la donnée reconstruite non pas avec la consigne qui a été utilisée pour élaborer l'affichage, mais avec une consigne analogue provenant d'une source parallèle, indépendante du calculateur principale 10, et surtout du contrôleur vidéo.

Le moyen de comparaison 52 du dispositif 40 compare la donnée reconstruite avec la valeur de consigne de cette donnée.

Le moyen d'alarme 54 génère une alarme en fonction du résultat obtenu en sortie du moyen de comparaison 52.

Le dispositif 40 comporte un interrupteur commandé 60 disposé en série sur une ligne d'alimentation 62 du système de rétroéclairage 34 de la dalle 32. Le moyen d'alarme 54 est apte à commander en ouverture l'interrupteur 60 en cas d'écart entre la donnée reconstruite et la valeur de consigne. Le système de rétroéclairage 34 de la dalle étant alors hors tension, les informations affichées sont illisibles pour le conducteur, car le dispositif d'affichage apparaît totalement noir. En effet, une défaillance même partielle de la dalle est immédiatement identifiable visuellement par l'utilisateur, qui prendra alors les dispositions appropriées pour pallier cette défaillance.

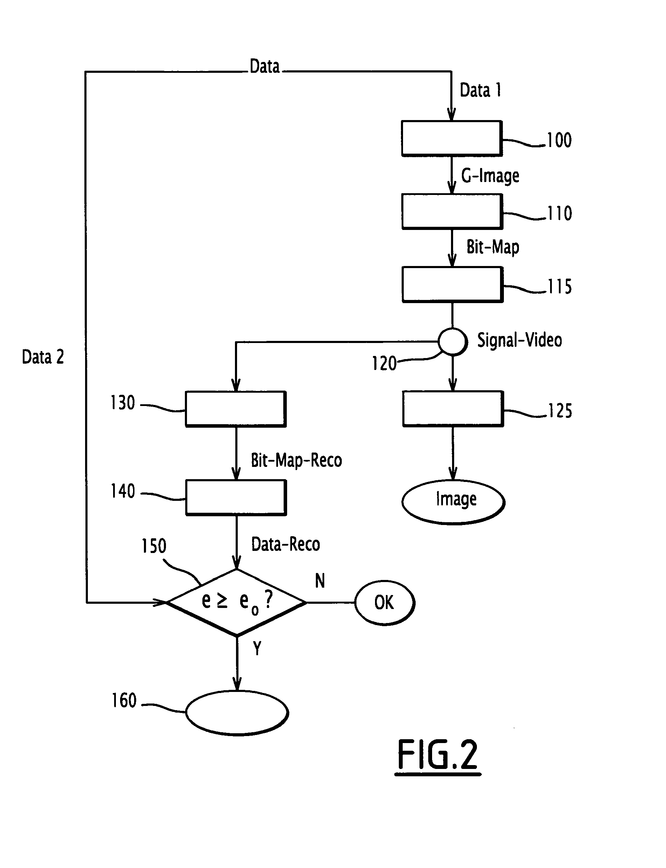

Le procédé de vérification de l'intégrité de l'affichage mis en oeuvre par le dispositif de vérification 40 va maintenant être décrit par référence à la Figure 2.

Sur cette figure, une donnée sensible Data, est à afficher en cabine, en temps réel. Il s'agit par exemple de la vitesse instantanée du véhicule ferroviaire. Cette donnée est mesurée par une première chaîne d'acquisition. La valeur mesurée à un instant donné par cette première chaîne est dénommée Data1.

La voie d'affichage est représentée sur la partie droite de la Figure 2. Elle permet d'afficher la valeur mesurée Data1 à l'intérieur d'une image affichée Image sur la dalle du dispositif d'affichage 14.

Pour ce faire, à l'étape 100, une série d'ordres graphiques G-Image est générée par le calculateur principal 10, à partir de la valeur mesurée Data1.

La série d'ordres graphiques G-Image est transmise au contrôleur vidéo 12.

A l'étape 110, le contrôleur vidéo 12 traite la série d'ordres graphiques G-Image pour générer une bit-map Bit-Map qu'il stocke dans ses moyens de mémorisation 24.

En utilisant les moyens de pilotage 26 adaptés, le contrôleur vidéo 12 génère (étape 115) un signal vidéo Sianal-Video LVDS à partir de la bit-map Bit-Map. Il transmet ce signal le long de la liaison 30, en direction du dispositif d'affichage 14.

Enfin, à l'étape 125, le dispositif d'affichage 14 affiche l'image sur la dalle 32 en fonction du signal Sianal-Video reçu.

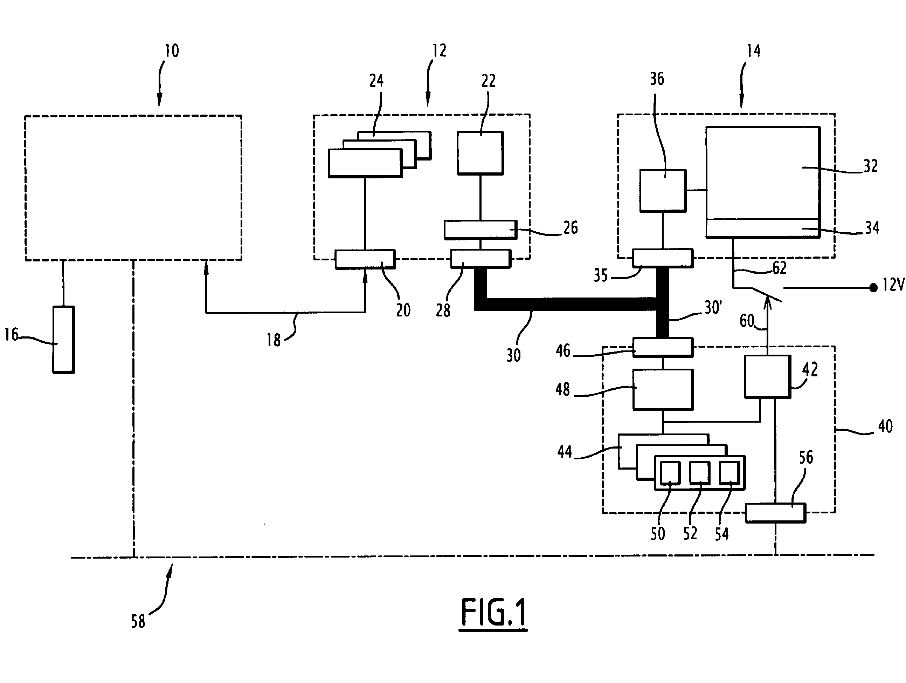

Sur la partie gauche de la figure 1, la voie de vérification de l'intégrité de l'affichage consiste d'abord à acquérir le signal vidéo Sianal-Video, en le prélevant par dérivation de la liaison 30 entre le contrôleur vidéo 12 et le dispositif d'affichage 14 (étape 120).

La première étape 130 consiste, grâce aux moyens de reconstruction 46, à reconstruire, à partir du signal vidéo Sianal-Video prélevé, une bit-map reconstruite, Bit-Map-Reco, qui est stockée dans la mémoire 44 du dispositif 40. Il est à noter que cette reonctruction peut intervenir sur une partie seulement de l'image affichée. Ainsi, un paramétrage approprié permet de ne prélever sur le signal vidéo Signal-Video uniquement les données correspondant à la zone où se trouve localisée l'information à vérifier, de façon à alléger le traitement. Ce paramétrage peut être adapté ou programmé en fonction de l'ergonomie de l'affichage. La bit-map reconstruite Bit-Map-Reco est stockée pendant une durée suffisante pour permettre le traitement de reconnaissance décrit ci-après.

Puis, à l'étape 140, en exécutant le moyen d'analyse 50 qui met en oeuvre, par exemple, des programmes de reconnaissance de formes, la bit-map reconstruite Bit-Map-Reco est analysée de manière à en extraire une donnée reconstruite Data-Reco, correspondant à la donnée contenue dans l'image affichée image.

Plus précisément, cette extraction peut se faire selon un algorithme qui dépend de la manière dont l'information est affichée. Ainsi, dans le cas où l'information est affichée sous forme d'un ensemble de caractères alphanumériques, et en particulier de chiffres, l'extraction se fait par un procédé de reconnaissance de caractères, et par exemple par une série de comparaisons matricielles avec des images de référence de caractères mémorisées. Ceci est d'autant plus facile que les positions des différents caractères peuvent être prédéfinies. Dans le cas où l'information se présente sous forme d'un « bar-graph », c'est-à-dire d'une zone allongée sensiblement rectangulaire présentant deux régions de couleurs distinctes, l'extraction consiste à détecter dans cette zone la ligne de changement de couleur pour en mesurer la position relative à l'intérieur de ladite zone. Dans le cas où l'information est affichée par une figure analogue à un cadran à aiguille, l'extraction peut consister à détecter l'intersection de la ligne figurant l'aiguille avec un arc de cercle centré sur le point de pivotement de l'aiguille. Un résultat de meilleure fiabilité peut être obtenu en multipliant les arcs de cercle concentriques et en combinant les intersections détectées.

A l'issue de l'étape d'analyse, l'étape 150 de comparaison permet de comparer un écart e par rapport à un écart seuil e₀. L'écart e est obtenu par différence entre la donnée reconstruite Data-Reco et une valeur de consigne Data2, à l'instant considéré. Comme précédemment indiqué, la valeur de consigne provient, de préférence, d'une seconde chaîne d'acquisition permettant de mesurer la valeur instantanée Data2 de la donnée Data de manière totalement indépendante de la première chaîne d'acquisition.

Lorsque l'écart e instantané reste inférieur à l'écart seuil e₀, cela signifie qu'aucun dysfonctionnement n'existe le long de la voie d'affichage de l'information.

En revanche, lorsque l'écart e instantané est supérieur à l'écart seuil e₀, une alarme est déclenchée (étape 160).

Dans le mode de réalisation actuellement envisagé, cette alarme consiste à actionner l'interrupteur commandé 60 pour qu'il bascule de la position fermée à la position ouverte, de manière à mettre hors tension le système de rétroéclairage 34 de la dalle 32.

D'autres algorithmes plus complexes qu'une simple comparaison d'un écart avec un seuil peuvent être envisagés pour décider du déclenchement d'une alarme.

En variante, le dispositif et le procédé qui viennent d'être décrits sont adaptés au traitement d'un signal vidéo respectant d'autres protocoles numériques que le protocole LVDS. Il est également envisagé que le signal vidéo soit analogique et non pas numérique.

En variante, le moyen de reconstruction ne reconstruit qu'une portion de l'image affichée, correspondant à la portion significative de cette image.

Le dispositif de vérification de l'intégrité de l'affichage évite de lire le contenu de la mémoire du contrôleur vidéo. Il permet de vérifier l'intégrité de l'affichage en aval du contrôleur vidéo, jusqu'à proximité immédiate du dispositif d'affichage.

Puisque le dispositif d'affichage comporte des pixels sans rémanence, si un dysfonctionnement affecte le dispositif d'affichage en tant que tel, l'image erronée affichée à un moment donné, ne sera plus affichée à l'instant suivant. Il n'y a pas par conséquent à craindre un dysfonctionnement du type conduisant à un figeage de l'image affichée.

Par conséquent, le dispositif selon l'invention, en vérifiant le signal vidéo appliqué en entrée du dispositif d'affichage, permet une vérification de l'intégrité de l'affichage sur la totalité de la voie d'affichage.

Le dispositif selon l'invention augmente ainsi significativement le niveau de sécurité de l'affichage.

Par ailleurs, dans l'architecture proposée, chaque moyen appartient soit à la voie d'affichage, soit à la voie de vérification. Il n'y a pas de moyens communs à ces deux voies, contrairement à l'art antérieur où la mémoire vidéo était lue à la fois par le processeur du contrôleur vidéo et par le processeur utilisé pour la vérification. De ce fait, l'homologation de l'architecture proposée, et plus particulièrement du dispositif de vérification, est plus simple à obtenir.

Avantageusement, le dispositif de vérification qui vient d'être présenté est intégré dans le dispositif d'affichage, la dérivation du signal vidéo se faisant immédiatement derrière une interface d'entrée commune aux dispositifs d'affichage et de vérification.

D'autres variantes sont envisageables, comme déporter les fonctions de comparaison et d'alarme à distance des fonctions de reconstruction de l'image.

## Revendications

1. Dispositif (40) de vérification de l'intégrité d'une donnée affichée dans une zone d'une image (image), sur un dispositif d'affichage (14) du type comportant une dalle de pixels, piloté par un contrôleur vidéo (12), le contrôleur vidéo étant connecté au dispositif d'affichage par une liaison (30) adaptée et lui transmettant un signal vidéo (Signal-Video) dans un format prédéterminé, comportant
- une interface d'entrée (46) permettant de connecter le dispositif de vérification en dérivation de la liaison entre le contrôleur vidéo et le dispositif d'affichage de manière à appliquer ledit signal vidéo en entrée du dispositif de vérification,
- un moyen de reconstruction (48) apte, à partir du signal vidéo appliqué sur l'interface d'entrée du dispositif de vérification, à reconstruire une image (Bit-Map-Reco) correspondant à ladite zone de l'image affichée sur le dispositif d'affichage ;
- un moyen d'analyse (50) apte, à partir de l'image reconstruite, à extraire une donnée reconstruite (Data-Reco) ;
- un comparateur (52) apte à comparer la donnée reconstruite (Data-Reco) avec une valeur de consigne (Data2) de la donnée à afficher (Data),
**caractérisé en ce qu'**il comporte, en outre, un moyen d'alarme (54) apte à déclencher un signal ou une alarme de dysfonctionnement en fonction du résultat en sortie du comparateur et adapté pour commander un interrupteur (60) disposé sur une ligne d'alimentation en puissance électrique du dispositif d'affichage (14).

2. Dispositif selon la revendication 1, **caractérisé en ce que** ledit dispositif d'affichage (14) comporte une dalle TFT (12).

3. Dispositif selon l'une quelconque des revendications précédentes, **caractérisé en ce que** le signal vidéo (Signal-Video) est un signal numérique, de préférence du type LVDS.

4. Dispositif selon l'une quelconque des revendications précédentes, **caractérisé en ce que** le moyen d'analyse (52) de l'image reconstruite (Bit-Map-Reco) comporte des moyens de reconnaissance de formes.

5. Dispositif selon l'une quelconque des revendications précédentes, **caractérisé en ce que** ladite zone couvre une portion seulement de l'image affichée.

6. Dispositif selon l'une quelconque des revendications précédentes, **caractérisé en ce qu'**il comporte une interface d'entrée/sortie (56) apte à recevoir un signal correspondant à une valeur de consigne (Data2) de la donnée à afficher (Data).

7. Dispositif selon la revendication 6, **caractérisé en ce que** ladite interface d'entrée/sortie (56) est propre à permettre une connexion à un réseau local (18), de préférence supportant le protocole Ethernet.

8. Dispositif selon l'une quelconque des revendications précédentes, **caractérisé en ce que** ledit moyen de reconstruction (48) est adapté pour effectuer un traitement du signal vidéo sensiblement inverse au codage effectué par un moyen de pilotage (26) dont est muni le contrôleur vidéo (12) pour piloter le dispositif d'affichage (14).

9. Procédé de vérification de l'intégrité d'une donnée affichée dans une zone d'une image (Image) par un dispositif d'affichage (14) piloté par un contrôleur vidéo (12), le contrôleur vidéo étant connecté au dispositif d'affichage par une liaison (30) adaptée et lui transmettant un signal vidéo (Signal-Video) dans un format prédéterminé, comportant les étapes consistant à :
- acquérir (125) ledit, signal vidéo (Signal-Video) transmis le long de la liaison reliant le contrôleur vidéo au dispositif d'affichage ;
- reconstruire (130), à partir dudit signal vidéo, une image reconstruite (Bit-Map-Reco) correspondant à ladite zone de l'image affichée (Image) par le dispositif d'affichage ;
- analyser (140) l'image reconstruite pour en extraire une donnée reconstruite (Data-Reco) ; et,
- comparer (150) la donnée reconstruite (Data-Reco) avec une valeur de consigne (Data2) de la donnée à afficher (Data),
**caractérisé en ce qu'**il comporte, en outre, une étape consistant à déclencher une alarme (160) adaptée en fonction du résultat de l'étape de comparaison et à commander un interrupteur (60) disposé sur une ligne d'alimentation en puissance électrique du dispositif d'affichage (14).

## Claims

1. A device (40) for verifying the integrity of a datum displayed in an area of an image (Image) on a display device (14) of the type including a slab of pixels, which is driven by a video controller (12), the video controller being connected to the display device through a suitable link (30) and transmitting to said display device a video signal (Video-signal) in a predetermined format, including
- an input interface (46) allowing the verification device to be connected as a bypass of the connection between the video controller and the display device so as to apply said video signal at the input of the verification device,
- a reconstruction means (48) capable, from the video signal applied on the input interface of the verification device, of reconstructing an image (Bit-Map-Reco) corresponding to said area of the displayed image on the display device;
- an analysis means (50) capable, from the reconstructed image, of extracting a reconstructed datum (Data-Reco);
- a comparator (52) capable of comparing the reconstructed datum (Data-Reco) with a set value (Data2) of the datum to be displayed (Data),
**characterized in that** it includes, additionally, an alarm means (54) capable of triggering a malfunction signal or alarm depending on the output result of the comparator and suitable for controlling a switch (60) positioned on an electric power supply line of the display device (14).

2. The device according to claim 1, **characterized in that** said display device (14) includes a TFT slab (12).

3. The device according to any of the preceding claims, **characterized in that** the video signal (Signal-Video) is a digital signal preferably of the LVDS type.

4. The device according to any of the preceding claims, **characterized in that** the means (52) for analyzing the reconstructed image (Bit-Map-Reco) includes pattern recognition means.

5. The device according to any of the preceding claims, **characterized in that** said area covers only a portion of the displayed image.

6. The device according to any of the preceding claims, **characterized in that** it includes an input/output interface (56) capable of receiving a signal corresponding to a set value (Data2) of the datum to be displayed (Data).

7. The device according to claim 6, **characterized in that** said input/output interface (56) is able to allow connection to a local network (18), preferably supporting the Ethernet protocol.

8. The device according to any of the preceding claims, **characterized in that** said reconstruction means (48) is suitable for carrying out a video signal processing which is substantially opposite to the coding carried out by a driving means (26) with which the video controller (12) is provided for driving the display device (14).

9. A method for verifying the integrity of a datum displayed in an area of an image (Image) by a display device (14) driven by a video controller (12), the video controller being connected to the display device through a suitable connection (30) and transmitting to it is a video signal (Signal-Video) in a predetermined format, including the steps of:
- acquiring (125), said video signal (Signal-Video) transmitted along the connection connecting the video controller to the display device;
- reconstructing (130), from said video signal, a reconstructed image (Bit-Map-Reco) corresponding to said area of the image (Image) displayed by the display device;
- analyzing (140) the reconstructed image for extracting therefrom a reconstructed datum (Data-Reco); and,
- comparing (150) the reconstructed datum (Data-Reco) with a set value (Data2) of the datum to be displayed (Data),
**characterized in that** it includes, additionally, a step consisting of triggering a suitable alarm (160) depending on the result of the comparison step and of controlling a switch (60) positioned on an electric power supply line of the display device (14).

## Patentansprüche

1. Vorrichtung (40) zur Überprüfung der Integrität einer Datei, die in einem Bereich eines Bilds (Image) auf einer Anzeigevorrichtung (14) der Bauart angezeigt wird, die eine Pixelplatte aufweist, die von einem Videocontroller (12) gesteuert wird, wobei der Videocontroller mit der Anzeigevorrichtung durch eine geeignete Verbindung (30) verbunden ist und ihr ein Videosignal (Signal-Video) in einem vorbestimmten Format übermittelt, aufweisend:
- eine Eingangsschnittstelle (46), die es erlaubt, die Überprüfungsvorrichtung unter Umgehung der Verbindung zwischen dem Videocontroller und der Anzeigevorrichtung derart zu verbinden, dass das besagte Videosignal am Eingang der Überprüfungsvorrichtung anliegt,
- ein Rekonstruktionsmittel (48), das imstande ist, ausgehend von dem an der Eingangsschnittstelle der Überprüfungsvorrichtung anliegenden Videosignal ein Bild zu rekonstruieren (Bit-Map-Reco), das dem besagten Bereich des auf der Anzeigevorrichtung angezeigten Bilds entspricht,
- ein Analysemittel (50), das imstande ist, ausgehend von dem rekonstruierten Bild eine rekonstruierte Datei (Data-Reco) zu extrahieren,
- einen Vergleicher (52), der imstande ist, die rekonstruierte Datei (Data-Reco) mit einem Sollwert (Data2) der anzuzeigenden Datei (Data) zu vergleichen,
**dadurch gekennzeichnet, dass** sie ferner ein Alarmmittel (54) umfasst, das imstande ist, in Abhängigkeit vom Ergebnis am Ausgang des Vergleichers ein Signal oder einen Fehlfunktionsalarm auszulösen und geeignet, um einen Schalter (60) zu steuern, der auf einer Versorgungsleitung der Anzeigevorrichtung (14) mit elektrischer Leistung angeordnet ist.

2. Vorrichtung nach Anspruch 1, **dadurch gekennzeichnet, dass** die besagte Anzeigevorrichtung (14) eine TFT-Platte (12) umfasst.

3. Vorrichtung nach einem der vorangehenden Ansprüche, **dadurch gekennzeichnet, dass** das Videosignal (Signal-Video) ein digitales Signal, vorzugsweise vom Typ LVDS, ist.

4. Vorrichtung nach einem der vorangehenden Ansprüche, **dadurch gekennzeichnet, dass** das Analysemittel (52) des rekonstruierten Bilds (Bit-Map-Reco) Formwiedererkennungsmittel umfasst.

5. Vorrichtung nach einem der vorangehenden Ansprüche, **dadurch gekennzeichnet, dass** der besagte Bereich nur einen Abschnitt des angezeigten Bilds abdeckt.

6. Vorrichtung nach einem der vorangehenden Ansprüche, **dadurch gekennzeichnet, dass** sie eine Eingangs-/Ausgangs-Schnittstelle (56) umfasst, die imstande ist, ein Signal zu empfangen, das einem Sollwert (Data2) der anzuzeigenden Datei (Data) entspricht.

7. Vorrichtung nach Anspruch 6, **dadurch gekennzeichnet, dass** die Eingangs-/Ausgangs-Schnittstelle (56) imstande ist, eine Verbindung mit einem lokalen Netzwerk (18), das vorzugsweise das Ethernet-Protokoll unterstützt, zu erlauben.

8. Vorrichtung nach einem der vorangehenden Ansprüche, **dadurch gekennzeichnet, dass** das besagte Rekonstruktionsmittel (48) geeignet ist, um eine Verarbeitung des Videosignals etwa umgekehrt zur Codierung durchzuführen, die von einem Steuerungsmittel (26) durchgeführt wird, mit dem der Videocontroller (12) ausgestattet ist, um die Anzeigevorrichtung (14) zu steuern.

9. Verfahren zur Überprüfung der Integrität einer Datei, die in einem Bereich eines Bilds (Image) von einer Anzeigevorrichtung (14) angezeigt wird, die von einem Videocontroller (12) gesteuert wird, wobei der Videocontroller mit der Anzeigevorrichtung durch eine geeignete Verbindung (30) verbunden ist und ihr ein Videosignal (Signal-Video) in einem vorbestimmten Format übermittelt, das die folgenden Schritte aufweist:
- Erfassung (125) des besagten Videosignals (Signal-Video), das entlang der Verbindung übertragen wird, die den Videocontroller mit der Anzeigevorrichtung verbindet,
- Rekonstruktion (130), ausgehend vom besagten Videosignal, eines rekonstruierten Bilds (Bit-Map-Reco), das dem besagten Bereich des von der Anzeigevorrichtung angezeigten Bilds (Image) entspricht,
- Analyse (140) des rekonstruierten Bilds, um daraus eine rekonstruierte Datei (Data-Reco) zu extrahieren, und
- Vergleich (150) der rekonstruierten Datei (Data-Reco) mit einem Sollwert (Data2) der anzuzeigenden Datei (Data),
**dadurch gekennzeichnet, dass** es ferner einen Schritt umfasst, der darin besteht, einen in Abhängigkeit vom Ergebnis des Vergleichsschritts geeigneten Alarm (160) auszulösen und einen Schalter (60) zu betätigen, der der auf einer Versorgungsleitung der Anzeigevorrichtung (14) mit elektrischer Leistung angeordnet ist.
